(19) Europäisches Patentamt
European Patent Office
Office européen des brevets

(11) **EP 2 090 126 B1**

(12) **EUROPEAN PATENT SPECIFICATION**

(45) Date of publication and mention
of the grant of the patent:
**14.03.2012   Bulletin 2012/11**

(51) Int Cl.:
***H04W 74/08*** (2009.01)

(21) Application number: **07825501.5**

(22) Date of filing: **25.10.2007**

(86) International application number:
**PCT/IB2007/003223**

(87) International publication number:
**WO 2008/050228 (02.05.2008 Gazette 2008/18)**

(54) **METHOD FOR IMMEDIATE ACCESS TO A RANDOM ACCESS CHANNEL**

VERFAHREN FÜR SOFORTZUGRIFF AUF EINEN DIREKTZUGRIFFSKANAL

PROCÉDÉ PERMETTANT UN ACCÈS IMMÉDIAT À UN CANAL D'ACCÈS ALÉATOIRE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **26.10.2006   US 855070 P**

(43) Date of publication of application:
**19.08.2009   Bulletin 2009/34**

(73) Proprietor: **Nokia Corporation
02150 Espoo (FI)**

(72) Inventors:
• **PIHLAJA, Juha
  00910 Helsinki (FI)**
• **KORHONEN, Juha
  02210 Espoo (FI)**

(74) Representative: **Tognetty, Virpi Maria et al
Nokia Corporation
IPR Department
Keilalahdentie 4
02150 Espoo (FI)**

(56) References cited:
**EP-A- 0 994 604          WO-A-00/14989
WO-A-97/19525          WO-A-2007/052900
US-A1- 2006 084 432**

• **"Universal Mobile Telecommunications System
(UMTS); Medium Access Control (MAC) protocol
specification (3GPP TS 25.321 version 6.10.0
Release 6); ETSI TS 125 321", ETSI STANDARDS,
LIS, SOPHIA ANTIPOLIS CEDEX, FRANCE, vol. 3-
R2, no. V6.10.0, 1 September 2006 (2006-09-01),
XP014035574, ISSN: 0000-0001**

**Description**

TECHNICAL FIELD

The present invention relates generally to an access method in a mobile communication system. In particular, the present invention relates to a method for accessing a random access channel (RACH) in packet based mobile communication networks. Examples of such networks include universal terrestrial radio access network (UTRAN) and evolved universal terrestrial radio access network (E-UTRAN).

BACKGROUND ART

The present invention concerns procedures for accessing a random access channel (RACH), used during the initial access to a mobile communication network. The RACH is a common transport channel for initial uplink transmission from a mobile terminal (also known as user equipment (UE) device or wireless communication device) to a network entity such as a base station (also known as a Node B). The RACH function is different depending on the technology used in the communication network. In this application, RACH access in frequency division duplexing (FDD) mode in E-UTRAN according to long term evolution (LTE) of the Third Generation Partnership Project (3GPP) specifications is exemplified and the corresponding procedure(s) in UTRAN is referenced.

The transport channel RACH is carried by a physical random access channel (PRACH). A random access transmission is accomplished on the RACH in conjunction with a downlink indicator channel that carries acquisition indicator signals. The random access transmission normally uses a "slotted ALOHA" technique. That means a UE can start a random access transmission on the RACH at the beginning of a number of time intervals, denoted as access slots. A RACH message is composed by one or more preambles and a message body. The length and interval of the access time slots and the lengths of the RACH preamble and the message body are specified in respective network specifications. For example, in UTRAN, there are 15 RACH access slots per two frames and they are spaced 5120 chips apart. A RACH preamble is 4096 chips long and a message body is 10 or 20 ms long. In the not-yet-finalized E-URTAN, the density of the access time slots has not yet been decided. The structure of the RACH message may also be different from that of the UTRAN. In a basic configuration, for example, the length of the preamble may be 1 ms that includes the preamble sequence, its cyclic prefix and a guard time.

RACH is a contention-based channel. Several UEs may access one RACH time slot at same time and result in a collision. Therefore, a transmission by a UE may not be successful in the first try. A solution aimed to resolve the conflicts, so that all messages are eventually transmitted successfully, is presented in the 3GPP specifications for UTRAN. The solution is a procedure based on a so-called persistence test. (Reference: 3rd Generation Partnership Project; Technical Specification Group Radio Access Network; Medium Access Control (MAC) Protocol Specification, Release 7, 3GPP TS 25.321 V7.1.0, 2006-06 and V6.10.0 2006-09) However, because one or more persistence tests are required for every UE at beginning of every RACH transmission, regardless of the network conditions, the procedure may cause an unnecessary waiting time for a UE.

US 2006/0084432 discloses a method of differentiated access parameters for random access channels. A mobile station sends an access message on the reverse access channel and its selects a set of access parameters based on the type of service. For higher priority services, the mobile station selects a set of access parameters that reduces call setup latency. The network can change a selected set of access parameters by sending an access parameter message containing the updated parameter values.

WO 97/19525 discloses a method and apparatus for accessing a communication system relying on the use of varying access probabilities for subscribers or messages of varying priority. A serving infrastructure entity determines access probabilities in response to known system parameters like the current rate of access attempts for each priority class of user/message.

Therefore, what is needed is a modified procedure for the RACH access that allows the UE to bypass the persistence tests under certain conditions or always. By bypassing the persistence tests, the UE may start a RACH transmission immediately when a need to transmit emerges.

Accordingly, what is also needed is an apparatus so equipped for performing the modified procedure, and a network entity that facilitates the execution of the modified procedure and accepts the RACH transmission from the apparatus according to the modified procedure.

SUMMARY OF THE INVENTION

In a first aspect of the invention, a method is provided according to claim 1. The message comprises one or more preamble and a message body. The method comprises carrying out a preparatory persistence test in a random access time slot and determining whether it is allowed to transmit a first preamble of the message to the network entity in an immediately available access time slot of a random access channel, transmitting the first preamble if the transmission is allowed, and transmitting the message body if a positive acknowledgment to the first preamble is received from the network entity on another channel.

In the method, the determining whether it is allowed to transmit the first preamble may include allowing to transmit the first preamble invariably.

Alternatively, the determining whether it is allowed to transmit the first preamble may include allowing to transmit the first preamble if the user equipment device has not transmitted on the random access channel for longer than a predetermined time period.

Alternatively, the determining whether it is allowed to transmit the first preamble may include allowing to transmit the first preamble if the user equipment device has not transmitted on the random access channel for a number of access time slots of the random access channel that is greater than a predetermined number.

The method may further comprise generating a random time period. The determining whether it is allowed to transmit the first preamble may include allowing to transmit the first preamble if the user equipment device has not transmitted on the random access channel for longer than the random time period.

Alternatively, the method may further comprise generating a random integer. The determining whether it is allowed to transmit the first preamble may include allowing to transmit the first preamble if the user equipment device has not transmitted on the random access channel for a number of access time slots of the random access channel that is greater than the random integer.

The method may further comprise receiving a persistence value from the network entity. The determining whether it is allowed to transmit the first preamble may include allowing to transmit the first preamble if the received persistence value is larger than a predetermined persistence value.

Alternatively, the method may further comprise receiving an indicator from the network entity. The determining whether it is allowed to transmit the first preamble may include determining whether it is allowed to transmit the first preamble based on the indicator.

The method may further comprise performing one or more preparatory persistence tests prior to determining whether it is allowed to transmit the first preamble. A parameter may be determined by the one or more preparatory persistence tests. The determining whether it is allowed to transmit the first preamble may include determining whether it is allowed to transmit the first preamble based on the parameter.

The above one or more preparatory persistence tests may comprise setting the parameter as not allowing transmitting the first preamble, generating a random number, comparing the random number with a predetermined persistence value, setting the parameter as allowing transmitting the first preamble if the random number is less than the predetermined persistence value, and repeating generating the random number and comparing with the predetermined persistence value for each access time slot of the random access channel if no message needs to be transmitted.

In a second aspect of the invention, there is provided an apparatus according to claim 5. The message comprises one or more preamble and a message body. The apparatus comprises a processor configured to carry out a preparatory persistence test in a random access time slot and a processor for determining whether it is allowed to transmit a first preamble of the message to the network entity in an immediately available access time slot of a random access channel, a transmitter for transmitting the first preamble if the transmission is allowed and transmitting the message body if a positive acknowledgement to the first preamble is received, and a receiver for receiving the acknowledgement from the network entity on another channel.

The processor of the apparatus may be configured to allow transmitting the first preamble invariably.

Alternatively, the processor of the apparatus may be configured to allow transmitting the first preamble if the apparatus has not transmitted on the random access channel for longer than a predetermined time period.

Alternatively, the processor of the apparatus may be configured to allow transmitting the first preamble if the apparatus has not transmitted on the random access channel for a number of access time slots of the random access channel that is greater than a predetermined number.

The apparatus may further comprise a random number generator for generating a random time period. The processor of the apparatus may be configured to allow transmitting the first preamble if the apparatus has not transmitted on the random access channel for longer than the random time period.

Alternatively, the apparatus may further comprise a random number generator for generating a random integer. The processor of the apparatus may be configured to allow transmitting the first preamble if the apparatus has not transmitted on the random access channel for a number of access time slots of the random access channel that is greater than the random integer.

The receiver of the apparatus may be configured to receive a persistence value from the network entity. The processor of the apparatus may be configured to allow transmitting the first preamble if the received persistence value is larger than a predetermined persistence value.

Alternatively, the receiver of the apparatus may be configured to receive an indicator from the network entity. The processor of the apparatus may be configured to determine whether it is allowed to transmit the first preamble based on the indicator.

Further, the processor of the apparatus may be configured to perform one or more preparatory persistence tests prior to determining whether it is allowed to transmit the first preamble. A parameter may be determined by the one or more preparatory persistence tests. The processor of the device may be configured to determine whether it is allowed to transmit the first preamble based on the parameter.

The apparatus may further comprise a random number generator. The one or more preparatory persistence tests may comprise setting the parameter as not allowing transmitting the first preamble, generating a random number by the random number generator, comparing the random number with a predetermined persistence value, setting the parameter as allowing transmitting the first preamble if the random number is less than the predetermined persistence value, and repeating generating the random number and comparing with the predetermined persistence value for each access time slot of the random access channel if no message needs to be transmitted.

The apparatus may be a user equipment device. The user equipment device may be a wireless communication device.

In one example, there may be provided a network entity. The message comprises one or more preambles and a message body. The network entity comprises a processing device configured to set a parameter according to one or more conditions of the random access channel, a receiver for receiving a first preamble of the message on a random access channel and for receiving the message body after an acknowledgement to the first preamble, and a transmitter for transmitting the parameter as a part of a system information broadcast and transmitting to the user equipment device the acknowledgement of the first preamble on another channel.

The user equipment device is configured to determine whether it is allowed to transmit the first preamble in an immediately available access time slot of the random access channel based on the parameter.

In the network entity, the parameter may be a persistence value set according to one or more conditions of the random access channel, and the user equipment device may be configured to allow transmitting the first preamble if the persistence value is larger than a predetermined persistence value.

In the network entity, the parameter may be an indicator set according to one or more conditions of the random access channel, and the user equipment device may be configured to determine whether to transmit the first preamble based on the indicator.

The network entity may be a radio resource controller of a base station.

In a fourth aspect of the invention, there is a computer program product according to claim 9. The product comprises a computer readable storage medium with program codes stored thereon for using in an apparatus for transmitting a message to a network entity. The message comprises one or more preambles and a message body. The program codes comprise instructions for carrying out a preparatory persistence test in a random access channel time slot and instructions for determining whether it is allowed to transmit a first preamble of the message to the network entity in an immediately available access time slot of a random access channel, instructions for transmitting the first preamble if the transmission is allowed, and instructions for transmitting the message body if a positive acknowledgement to the preamble is received from the network entity on another channel.

The instructions for determining whether it is allowed to transmit the first preamble may comprise instructions for allowing to transmit the first preamble invariably.

Alternatively, the instructions for determining whether it is allowed to transmit the first preamble may comprise instructions for allowing to transmit the first preamble, if the apparatus has not transmitted on the random access channel for longer than a predetermined time period, or if the apparatus has not transmitted on the random access channel for a number of access time slots of the random access channel that is greater than a predetermined number.

Alternatively, the program codes may further comprise instructions for generating a random time period or a random integer. The instructions for determining whether it is allowed to transmit the first preamble may comprise instructions for allowing to transmit the first preamble, if the apparatus has not transmitted on the random access channel for longer than the random time period, or if the apparatus has not transmitted on the random access channel for a number of access time slots of the random access channel that is greater than the random integer.

The program codes may further comprise instructions for receiving a persistence value or an indicator from the network entity. The instructions for determining whether it is allowed to transmit the first preamble may comprise instructions for allowing to transmit the first preamble if the received persistence value is larger than a predetermined persistence value or for determining whether to transmit the first preamble based on the indicator.

The program code may further comprise instructions for performing one or more preparatory persistence tests prior to determining whether it is allowed to transmit the first preamble. A parameter may be determined by the one or more preparatory persistence tests. The instructions for determining whether it is allowed to transmit the first preamble may comprise instructions for determining whether it is allowed to transmit the first preamble based on the parameter.

The above instructions for performing one or more preparatory persistence tests may comprise instructions for setting the parameter as not allowing transmitting the first preamble, instructions for generating a random number, instructions for comparing the random number with a predetermined persistence value, instructions for setting the parameter as allowing transmitting the first preamble if the random number is less than the predetermined persistence value, and instructions for repeating generating the random number and comparing with the predetermined persistence value for each access time slot of the random access channel if no message needs to be transmitted.

In one embodiment there is, an apparatus capable of transmitting a message to a network entity. The message comprises one or more preambles and a message body. The apparatus comprises means for carrying out a preparatory persistence test in a random access channel time slot and means for determining whether it is allowed to transmit a first preamble of the message to the network entity in an immediately available access time slot of a random access channel, means for transmitting the first preamble if the transmission is allowed, means for receiving an acknowledgement to the preamble from the network entity on another channel, and means for transmitting the message body if the acknowledgement is a positive acknowledgement.

The means for determining whether it is allowed to transmit the first preamble may be configured to allow transmitting the preamble invariably.

Alternatively, the means for determining whether it is allowed to transmit the first preamble may be configured to allow transmitting the first preamble if the apparatus has not transmitted on the random access channel for longer than a predetermined time period or for a number of access time slots of the random access channel that is greater than a predetermined number.

The apparatus may further comprise means for generating a random time period or a random integer. The means for determining whether it is allowed to transmit the first preamble may be configured to allow transmitting the first preamble if the apparatus has not transmitted on the random access channel for longer than the random time period or for a number of access time slots of the random access channel that is greater than the random integer.

The apparatus may further comprise means for receiving a persistence value or an indicator from the network entity. The means for determining whether it is allowed to transmit the first preamble may be configured to allow transmitting the first preamble if the received persistence value is larger than a predetermined persistence value or is configured to determine whether it is allowed to transmit the first preamble based on the indicator.

The apparatus may further comprise means for performing one or more preparatory persistence tests prior to determining whether it is allowed to transmit the first preamble. A parameter may be determined by the one or more preparatory persistence tests. Whether it is allowed to transmit the first preamble may be determined based on the parameter.

In one example there is, a network entity for receiving a message from a user equipment device. The message comprises one or more preambles and a message body. The network entity comprises means for setting a parameter according to one or more conditions of the random access channel, means for transmitting the parameter as a part of a system information broadcast, means for receiving a first preamble of the message on a random access channel, means for transmitting to the user equipment device the acknowledgement of the first preamble on another channel, and means for receiving the message body after an acknowledgement to the first preamble. The user equipment device is configured to determine whether it is allowed to transmit the first preamble in an immediately available access time slot of the random access channel based on the parameter.

BRIEF DESCRIPTION OF THE DRAWINGS

The above and other objects, features and advantages of the invention will become apparent from a consideration of the subsequent detailed description presented in connection with accompanying drawings, in which:

Fig. 1 is a flow diagram of an exemplary RACH access procedure;

Fig. 2 is a flow diagram of an exemplary persistence test and PRACH transmission procedure;

Fig. 3 is a flow diagram of an immediate RACH access procedure according to a first embodiment of the invention;

Fig. 4 is a flow diagram of an immediate RACH access procedure according to a second embodiment of the invention;

apparent from a consideration of the subsequent detailed description presented in connection with accompanying drawings, in which:

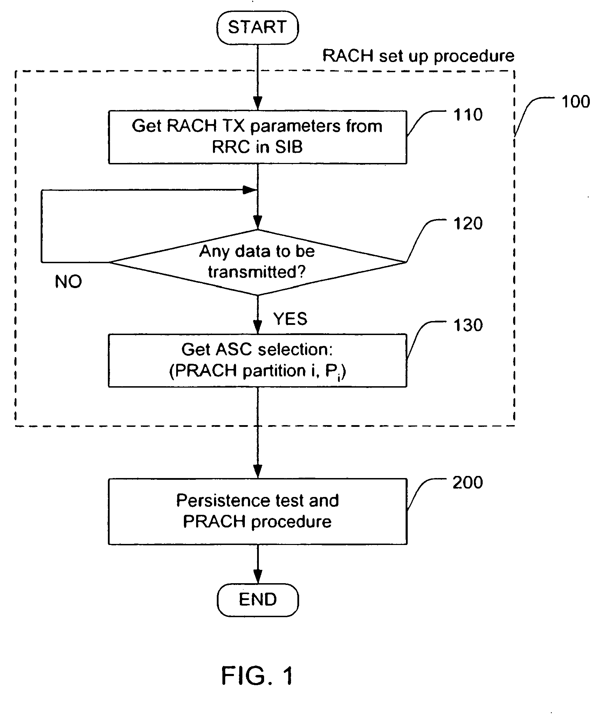

Fig. 1 is a flow diagram of an exemplary RACH access procedure;

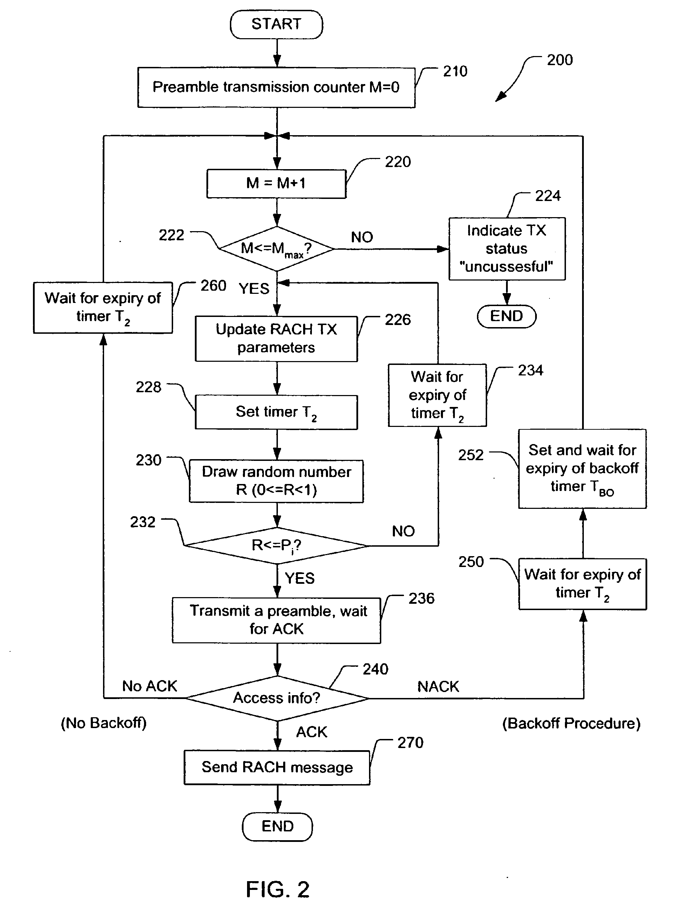

Fig. 2 is a flow diagram of an exemplary persistence test and PRACH transmission procedure;

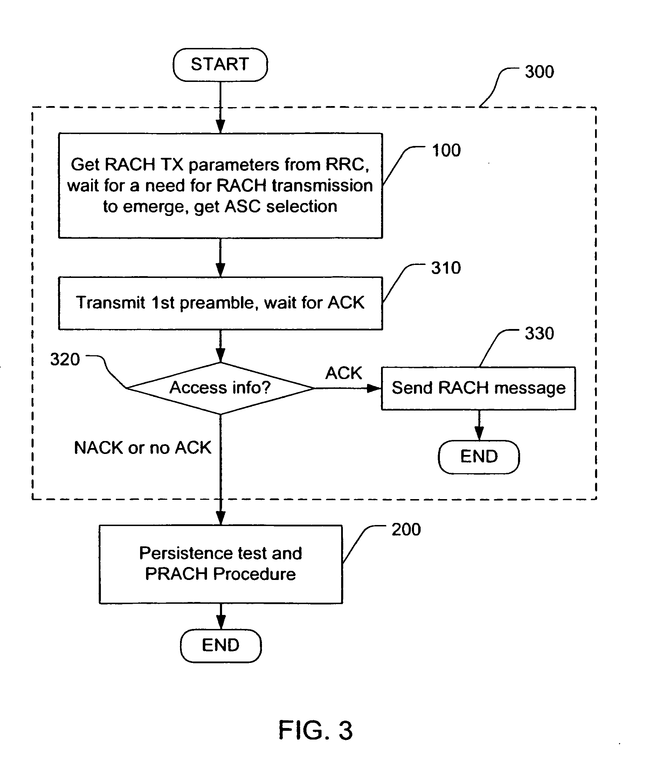

Fig. 3 is a flow diagram of an immediate RACH access procedure according to a first embodiment of the invention;

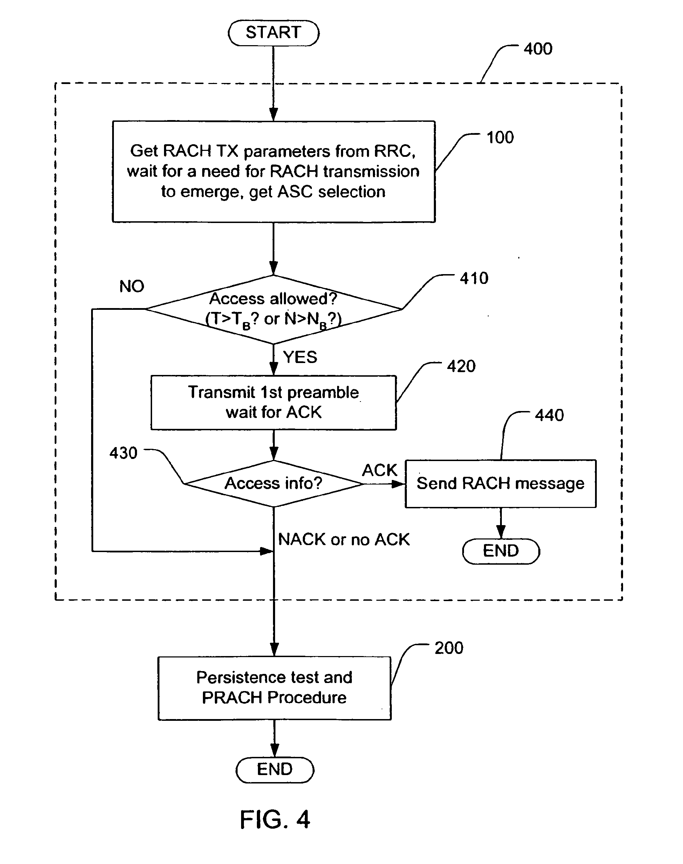

Fig. 4 is a flow diagram of an immediate RACH access procedure according to a second embodiment of the invention;

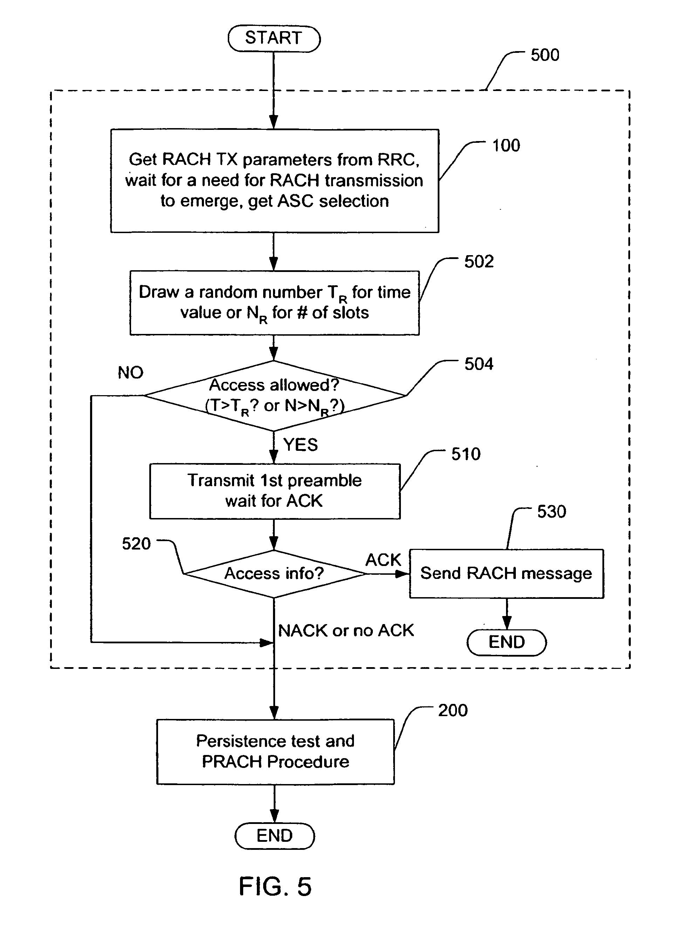

Fig. 5 is a flow diagram of an immediate RACH access procedure according to a third embodiment of the invention;

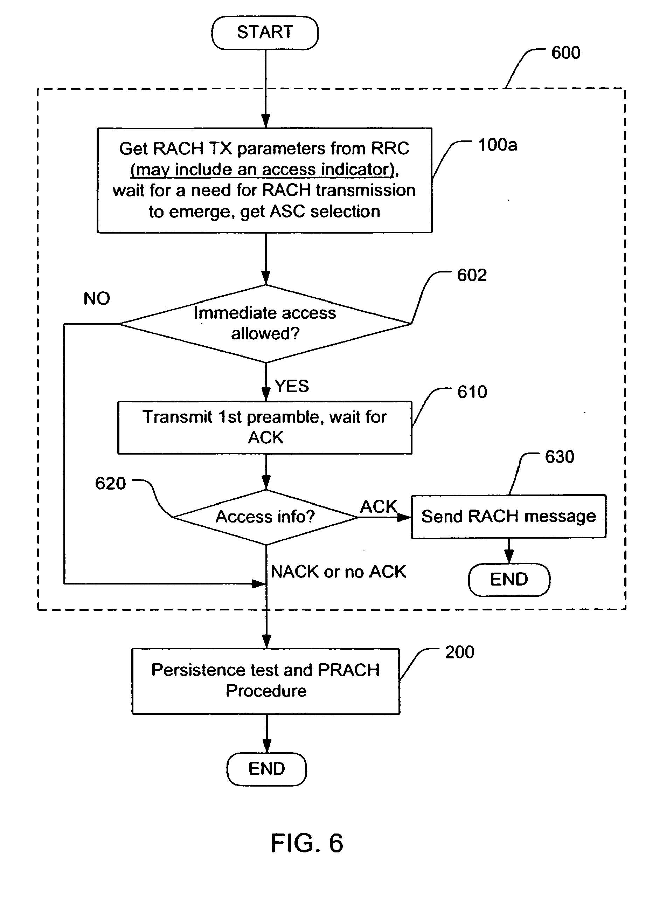

Fig. 6 is a flow diagram of an immediate RACH access procedure according to a fourth embodiment of the invention;

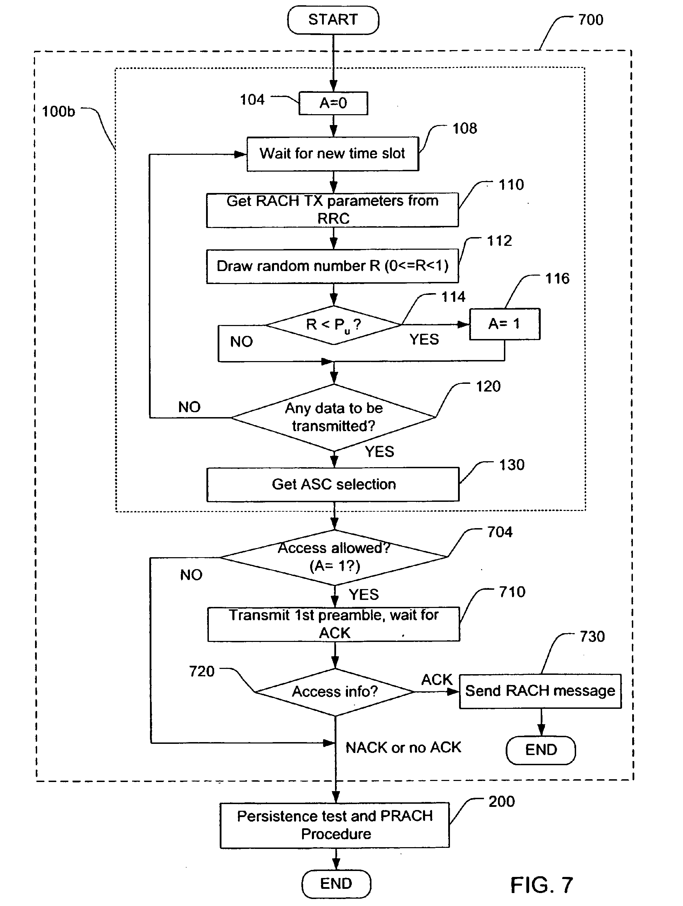

Fig. 7 is a flow diagram of an immediate RACH access procedure according to a fifth embodiment of the invention; and

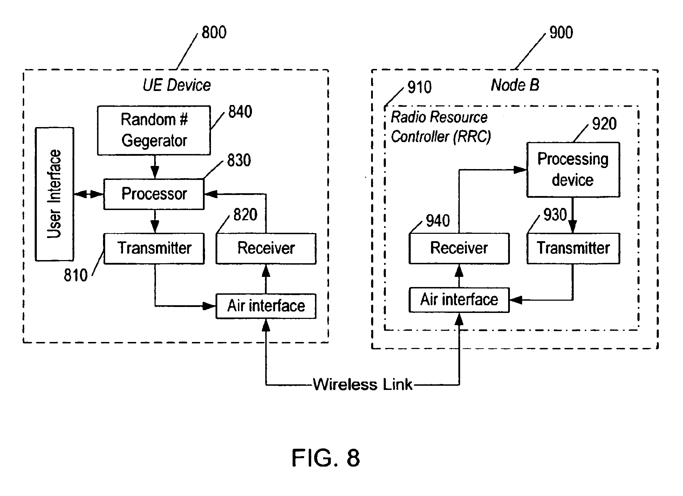

Fig. 8 is a block diagram of a system comprising a user equipment device and a network entity according to the invention.

## DETAILED DESCRIPTION OF THE INVENTION

In a user equipment (UE) device such as a mobile terminal, accessing the RACH for data transmission is controlled by a medium access control (MAC). MAC is a sub-layer of a data link layer of the user-plane protocol stack of the UE. MAC sits between a physical layer (layer 1, the lowest layer) and a radio link control (RLC) sub-layer of the data link layer (layer 2).

Referring now to Fig. 1, an exemplary RACH transmission procedure comprises a RACH set up procedure **100** and a persistence test and PRACH transmission procedure **200**. In the RACH set up procedure **100,** the MAC receives system information broadcast (SIB) from a radio resource controller (RRC) (step **110**). The SIB includes one or more RACH transmission parameters for the UE to set up the RACH transmission. The RACH transmission parameters include a maximum number of preamble ramping cycle ($M_{max}$) and a set of access service class (ASC) parameters. In a step **120,** the UE waits for a need for transmitting data on the RACH to emerge. When the need has emerged, in a step **130,** the MAC selects (or the RRC assigns) an ASC from the available set of ASCs. Selection of the ASC may be based on the priority or reason for the random access. The ASC parameters the MAC received from the RRC include an identifier *i* of a certain PRACH partition and an associated persistence value $P_i$ ($0 \leq P_i < 1$).

After completion of the RACH set up procedure **100,** the UE then initiates a RACH transmission according to the persistence test and PRACH transmission procedure **200.** An exemplary flow diagram of the procedure **200** is shown in Fig. 2.

Referring now to Fig. 2, the UE is required to perform one or more persistence tests to decide whether to transmit a RACH preamble in the present assess time slot. In a step **210,** a preamble transmission cycle count M is set to zero. In a next step **220,** the cycle count M is increased by 1. In a next step **222,** the MAC decides whether the current count M has exceeded the maximum allowable preamble ramping cycle, $M_{max}$. If $M > M_{max}$, the maximum number of preamble ramping cycle has been reached and, in a step **224,** the MAC informs a higher layer that originated the RACH transmission that the RACH transmission procedure is unsuccessful, and the RACH procedure **200** ends at this point. The higher layer may decide whether to restart the RACH transmission or give up.

If $M < M_{max}$, the maximum number of preamble ramping cycle has not been reached. In a step **226,** the MAC checks for update of the RACH transmission control parameters, and the RACH procedure continues with the following actions known as a persistence test.

In a step **228,** a timer $T_2$ is set. The length of the timer is from the current access slot to the next access slot allocated for transmitting a preamble. Should this persistence test fail, this timer ensures that a subsequent persistence test is not performed before the arrival of the next access slot. In a step **230,** a random number R ($0 \leq R < 1$) is generated. In a step **232,** the number R is compared with the persistence value $P_i$ of the selected ASC. If $R > P_i$, the persistence test fails. In a step **234,** the MAC must wait for the timer $T_2$ to expire before performing another persistence test. The persistence test is repeated until one of the tests succeeds ($R \leq P_i$). Upon passing the persistence test, in a step **236,** the UE transmits a RACH preamble at the current time slot.

After the transmission of the preamble, the MAC waits for a response on the downlink indicator channel. In a step **240,** if a positive acknowledgement (ACK) was received, the RACH message body may be sent in an allocated time slot for transmitting the message (step **270**). If the RACH were busy, a negative acknowledgement (NACK) would be received. In this case the MAC should initiate a back-off procedure as follows:

1. If the timer $T_2$ has not expired, wait for its expiry (step **250**);
2. Set a back-off timer $T_{BO}$ and wait for its expiry (step **252**); at this point, another preamble ramping cycle may start (returning to the step **220**).

If no response was received (no ACK), the MAC waits for the expiry of timer $T_2$ (step **260**) and starts another preamble ramping cycle (returning to step **220**). No back-off procedure is performed.

By adjusting the value of $P_i$ and changing the rate of RACH time slots, the network is able to keep the collisions on RACH at an acceptable level. However, because the persistence test is required for every UE at beginning of every RACH transmission, this RACH access procedure may sometimes result in an unnecessary waiting time for a UE.

The above-described procedure may be differently arranged depending on the system. In UTRAN system, for example, more than one preamble may be transmitted in the step 236 that involves actions of the physical layer. The MAC of UTRAN operates at the time resolution of a radio frame (10 ms) while several RACH access slots exist during one radio frame. Therefore, it has been reasonable to specify that the physical layer can be configured to send more than one preamble between the MAC actions like the persistence test (steps **230** and **232**). MAC of E-UTRAN, on the other hand, operates with the same time resolution that is used for determining the access slots of RACH. Then MAC can instruct the physical layer for each preamble transmission and step **236** involves transmission of only one preamble.

This invention provides a modification to the above-described RACH access procedure, namely an immediate RACH access procedure. The immediate RACH access procedure according to this invention allows a UE to bypass an initial persistence test under certain conditions or always. The invention is disclosed in the following exemplary embodiments.

_First example of the invention_

In this example of the invention, the UE is configured to transmit a preamble immediately after a need to transmit on RACH has emerged. If the transmission was successful (indicated by an ACK message), the UE can then transmit the message body at an allocated time slot. Therefore, a possible delay due to the persistence test may be avoided.

Referring now to Fig. 3, the immediate RACH access procedure according to this embodiment of the invention comprises a modified RACH set up procedure **300** and the persistence test and PRACH transmission procedure **200.**

In the modified RACH set up procedure **300,** the first few steps are the same as in the above-described RACH setup procedure **100,** i.e. the MAC receives system information broadcast (SIB) from a RRC, the UE waits for a need for transmitting data on the RACH to emerge, and when the need has emerged, the MAC selects an ASC from the available set of ASCs. Additionally, in a step **310,** the first preamble of the RACH message is transmitted immediately at a time slot that is allocated for transmitting the RACH preamble, and the MAC waits for a response on the downlink indicator channel. At a step **320,** the MAC determines if the response from the downlink indicator channel is a positive acknowledgement (ACK), a negative acknowledgement (NACK) or no acknowledgement (no ACK). If there is an ACK, a time slot is allocated for transmitting the message body. In a step **330,** the MAC transmits the RACH message in the time slot, reports to the higher layer that originated the RACH transmission that the transmission was successful and the immediate RACH access procedure ends. Otherwise, if there is a NACK (i.e. the channel is busy) or no response from the channel (no ACK), the MAC initiates the persistence test and PRACH transmission procedure **200** as described previously.

This example takes into account that, naturally, all UEs of a network have a random timing in attempting accesses to the RACH. The need to transmit from different UEs will occur at different times depending either on downlink activities or users' actions. Thus, the need to randomize the transmission time among the UEs is at least partially fulfilled by the randomness of the timing in the UEs themselves. In fact, the probability for two or more UEs to start transmissions on the RACH using the same RACH time slot is naturally low. Even if a collision does occur and the transmissions fail, the involved UEs will be informed (either by a NACK message from the network or a lack of acknowledgement from the network). If the first preamble transmissions fail due to the collision, the UEs start a second attempt according to the above-described persistence test and PRACH transmission procedure **200.** Eventually, because the persistence tests may place different UEs in different transmission time slots, all the UEs will be allowed to transmit on the RACH, albeit in different time slots.

_Second example of the invention_

According to this example of the invention, the UE is able to determine whether to allow an immediate RACH transmission without performing the persistence test. The determination may be based on one or more conditions already known to the UE.

In other words, the UE is allowed to transmit the first preamble of the RACH message if the time lapse (T) since the last RACH transmission by the same UE is longer than a predetermined time period ($T_B$), or the number of RACH time slots passed (N) since the last RACH transmission by the same UE is more than a predetermined number of RACH time slots ($N_B$).

Referring now to Fig. 4, the immediate RACH transmission procedure according to this embodiment of the invention comprises a modified RACH set up procedure **400** and the persistence test and PRACH transmission procedure **200.**

In the modified RACH set up procedure **400,** the first few steps are the same as in the above-described RACH setup procedure **100,** i.e. the MAC receives system information broadcast (SIB) from a RRC, the UE waits for a need for transmitting data on the RACH to emerge, and when the need has emerged, the MAC selects an ASC from the available set of ASCs. Additionally, in a step **410,** the value T or N is compared with the predetermined time period $T_B$ or predetermined number of time slots $N_B$, respectively. If T or N is greater than the predetermined time period $T_B$ or the predetermined number of slots $N_B$, respectively, the immediate access is allowed and the persistence test may be skipped if the immediate access is successful.

Then, in a step **420,** the first preamble of the RACH message is transmitted at the immediately available time slot that is allocated for transmitting a preamble, and the MAC waits for a response on the downlink indicator channel. In a step **430,** the MAC determines if the response from the downlink indicator channel is a positive acknowledgement (ACK), a negative acknowledgement (NACK) or no acknowledgement (no ACK). If there is an ACK, a time slot is allocated for transmitting the message body. In a step **440,** the MAC transmits the RACH message body, reports to the higher layer that originated the RACH transmission that the transmission was successful and the immediate RACH access procedure ends. Otherwise, if there is a NACK (i.e. the channel is busy) or no response from the channel (no ACK), the MAC initiates the persistence test and PRACH transmission procedure **200.**

After the above step **410,** if T or N is less than or equal to the predetermined time period $T_B$ or the predetermined number of slots $N_B$, respectively, the persistence test cannot be skipped, the MAC initializes a persistence test and PRACH transmission procedure **200.**

The predefined values $T_B$ or $N_B$ can be stored in the UE and may be adjustable. For example, if $T_B$ (or $N_B$) is set to be zero, the UE can always start RACH transmission immediately without the persistence test (same as the first embodiment of the invention).

This example of the invention is different from the first example of the invention in that one or more conditions must be met in order for the UE to skip the first persistence test. These conditions are predefined.

*Third example of the invention*

According to the third example of the invention, the UE is able to determine whether to it is allowed to transmit the first preamble of the RACH message without performing the persistence test. The determination is based on a random condition and, therefore, the result may vary depending on the condition.

In other words, the UE may start a first preamble transmission on the RACH if the time lapse ($T$) since the last RACH transmission by the same UE is longer than a random period of time $T_R$, or the number of RACH time slots passed ($N$) since the last RACH transmission by the same UE is more than a random number of RACH time slots $N_R$. $T_R$ may be a random value between 0 and a maximum value $T_{Rmax}$. $N_R$ may be a random integer between 0 and a maximum number $N_{Rmax}$.

Referring now to Fig. 5, the immediate RACH transmission procedure according to this embodiment of the invention comprises a modified RACH set up procedure **500** and the persistence test and PRACH transmission procedure **200.**

In the modified RACH set up procedure **500,** the first few steps are the same as in the above-described RACH setup procedure **100,** i.e. the MAC receives system information broadcast (SIB) from a RRC, the UE waits for a need for transmitting data on the RACH to emerge, and when the need has emerged, the MAC selects an ASC from the available set of ASCs. Additionally, in a step **502,** a random time value $T_R$ ($0 \leq T_R \leq T_{Rmax}$) or a random integer $N_R$ ($0 \leq NR \leq N_{Rmax}$) is drawn. In a step **504,** the random value $T_R$ or $N_R$ is compared with the time lapse since the last RACH transmission by the same UE, either in time value $T$ or in number of RACH time slots $N$. If $T>T_R$ or $N>N_R$ (YES), the persistence test can be skipped.

Then, in a step **510**, the first preamble of the RACH message is transmitted at an immediate available time slot that is allocated for transmitting a preamble, and the MAC waits for a response on the downlink indicator channel. In a step **520**, the MAC determines if the response from the downlink indicator channel is a positive acknowledgement (ACK), a negative acknowledgement (NACK) or no acknowledgement (no ACK). If there is an ACK, a time slot is allocated for transmitting the message body. In a step **530**, the MAC transmits the RACH message body at the time slot that is allocated for the RACH message body, reports to the higher layer that originated the RACH transmission that the transmission was successful and the immediate RACH access procedure ends. Otherwise, if there is a NACK (i.e. the channel is busy) or no response from the channel (no ACK), the MAC initiates the persistence test and PRACH transmission procedure **200.**

After the above step **502,** if $T \leq T_R$ or $N \leq N_R$ (NO), the persistence test cannot be skipped, the MAC initializes a persistence test and PRACH transmission procedure **200.**

This example of the invention is different from the second example of the invention in that the conditions for skipping the first persistence test are not predefined.

*Fourth example of the invention*

It would be even more desirable if the immediate RACH access procedure takes into account the network conditions at the time of attempting the RACH access. For example, if the network has a high load, the probability of two or more UEs interfere on the RACH would be relatively high. In this case, the RACH access procedure based on the persistence test would be more appropriate. Therefore, it would be desirable for the network to be able to instruct the UEs not to skip the required persistence test if, for example, the network notices that the load on RACH suddenly increases significantly.

According to the fourth embodiment of the invention, the UE is able to determine whether to attempt an immediate RACH transmission without performing the persistence test. The determination may be based on an instruction or indication from the network or one or more of the conditions known to the UE.

Referring now to Fig. 6, an immediate RACH transmission procedure according to this embodiment of the invention comprises a modified RACH set up procedure **600** and the persistence test and PRACH transmission procedure **200.**

The modified RACH set up procedure **600** comprises a set up procedure **100a.** The procedure **100a** is the same as the above-described RACH setup procedure **100,** except that the RACH transmission parameters in SIB may additionally include an access indicator, such as a signal or a parameter, that can be used by the UE for deciding whether to perform the persistence test before the first RACH preamble transmission. After completing the set up procedure **100a,** in a next step **602,** the MAC decides whether to perform the persistence test according to the persistence test and PRACH transmission procedure **200,** or start the first RACH preamble transmission without perform the persistence test. If the immediate access is allowed (YES), in a step **610,** a RACH preamble is transmitted at the next time slot allocated for transmitting the preamble, and MAC waits for a response on the downlink indicator channel. At a step **620,** the MAC determines if the response from the downlink indicator channel is a positive acknowledgement (ACK), a negative acknowledgement (NACK) or no acknowledgement (no ACK). If there is an ACK, a time slot is allocated for transmitting the message body. In a step **630,** the MAC transmits the RACH message at the time slot that is allocated for the RACH message, reports to the higher layer that originated the RACH transmission that the transmission was successful and the immediate RACH access procedure ends. Otherwise, if there is a NACK (i.e. the channel is busy) or no response from the channel (no ACK), the MAC initiates the persistence test and PRACH transmission procedure **200.**

Form the above step **602,** if the immediate access is not allowed (NO), the MAC initiates the persistence test and PRACH transmission procedure **200.**

The decision of whether or not to allow immediately RACH access in the step 602 is based on an indication that may be related to the network conditions or to the UE conditions. The indication may be one of the following:

(1) An indicator, such as a signal or a parameter, included in the SIB that the network broadcasts to all UEs;

(2) Conditions known to the UE, and the UE is configured to determine whether to skip the initial persistence test based on one or more of the conditions.

The indicator included in the SIB directs the UEs whether or not to make an immediate access to the RACH. For example, the network may set the indicator as permitting the immediate access if the load on the RACH is light. Otherwise, if the load on the RACH is heavy, the network may indicate that the immediate access is not allowed. The UE is configured to check the indication before transmitting the first preamble of every RACH message and act accordingly.

If the SIB does not include the indicator as described above, the UE may be configured to determine whether to perform the persistence test based on other system parameters received. For example, the UE may decide to skip the persistence test if the persistence value $P_i$ of the current ASC selection is higher than a predefined persistence value $P_B$. A high $P_i$ ($P_i$ close to 1) usually indicates that the network load is light. Therefore, it is less likely to cause collision even if the persistence test is skipped.

*Embodiment of the invention*

In the embodiment of the invention, the UE is allowed to start a first RACH preamble transmission immediately, if a preparatory persistence test after the last RACH transmission by the same UE is successful. The UE is configured to perform a preparatory persistence test at each RACH time slot. The UE may not use the current RACH time slot for transmission due to the lack of need for the transmission, but the result of the persistence test is recorded. If any of the preparatory persistence tests was successful, the UE can start the RACH transmission immediately, even if the load on the RACH generated by all the UEs collectively is high.

Referring now to Fig. 7, an immediate RACH transmission procedure according to this embodiment of the invention comprises a modified RACH set up procedure 700 and the persistence test and PRACH transmission procedure **200.** The modified RACH set up procedure **700** comprises a procedure **100b.** The procedure **100b** is modified based on the above-described RACH setup procedure **100,** with additional action steps that form one or more preparatory persistence tests. In the procedure **100b,** first, an indicator A is set to zero (step **104).** The MAC waits for the next time slot (step **108).** In a step **110,** the MAC receives RACH transmission parameters via the SIB. A preparatory persistence test is performed at this point. In a step **112,** a random number R ($0 \leq R < 1$) is generated. In a step **114,** the random number R is compared with a persistence value $P_u$. ($P_u$ may be predefined or provided in the system information broadcast.) If $R > P_u$, the preparatory persistence test fails. Otherwise, if $R \leq P_u$, the preparatory persistence test succeeds. If the preparatory persistence test is successful, in a step **116,** the indicator A is changed from 0 to 1.

Even if the preparatory persistence test is successful, the UE may not use the current RACH time slot for transmission due to the lack of need for the transmission. If the preparatory persistence test has failed and there is no need for the RACH transmission, the UE waits for the next time slot and starts a new preparatory persistence test (back to step **108).**

Between the preparatory persistence tests, the MAC checks if there is a need for transmitting data on the RACH (step **120).** If there is a need to transmit, in a step **130,** the MAC selects (or the RRC assigns) an ASC from the available set of ASCs and proceeds with either an immediate transmission of a RACH preamble or the persistence test and PRACH transmission procedure **200.**

In a step **704,** the decision of whether to immediately transmit a RACH preamble or proceed with the persistence test and PRACH transmission procedure **200** is based on the value of the indicator A. If A=1, the immediate access is allowed. In a step **710,** the first RACH preamble is transmitted at the immediately available time slot that is allocated for transmitting the preamble, and the MAC waits for a response on the downlink indicator channel. In a step **720,** the MAC determines if the response is a positive acknowledgement (ACK), a negative acknowledgement (NACK) or no acknowledgement (no ACK). If there is an ACK, a time slot is allocated for transmitting the message body. In a step **730,** the MAC transmits the RACH message body at the time slot that is allocated for the RACH message body, reports to the higher layer that originated the RACH transmission that the transmission was successful and the immediate RACH access procedure ends. Otherwise, if there is a NACK (i.e. the channel is busy) or no response from the channel (no ACK), the MAC initiates the persistence test and PRACH transmission procedure **200.**

If A=O, the immediate access is not allowed.

The MAC initiates the persistence test and PRACH transmission procedure **200**.

In the embodiment of the invention, the condition for skipping the persistence test is not deterministic. The possibility for a UE to make an immediate RACH transmission varies randomly. This procedure may reduce the possibility of a UE to create a high load on the RACH, even if the UE has many pending needs to transmit on the RACH. The use of preparatory persistency tests scales the limiting effect according to the rate of the RACH time slots.

The embodiment may be modified in various ways by people skilled in the art. For example, the preparatory persistence tests may be performed less than once in every time slot. For this purpose, a counter n may be used. The counter n represents the number of time slots that has passed without a RACH transmission (n may start from 0 and increments by one every time a new time slot appears). When there is data to be transmitted, a random number R is generated and this number is used in a preparatory persistence test in comparison with a variable persistence value $P_v$. $P_v$ may be calculated by using the following formula:

$$P_v = 1 - (1 - P_u)^n$$

If $R > P_v$, the preparatory persistence test is not successful and the indicator A is still zero. If $R \leq P_v$, the indicator A is set to 1.

Besides the above-described procedures, this invention also provides an apparatus and a network entity for performing the procedures. Such an apparatus may be a user equipment (UE) device configured to transmit a RACH message comprising one or more preambles and a message body to a network entity by using the above-described immediate RACH assess procedures. The UE device may be a wireless communication device.

As shown in Fig. 8, an exemplary UE device **800** of the invention comprises a transmitter **810**, a receiver **820**, a processor **830** and a random number generator **840**. The UE device **800** is configured to transmit a RACH message preamble through the transmitter **810**, receive a response on an downlink indicator channel through the receiver **820**, and transmit the RACH message body through the transmitter **810** if the acknowledgement is a positive acknowledgment.

The UE device **800** may use the processor **830** for determining whether it is allowed to transmit a first RACH preamble at an immediately available RACH access time slot after a need for transmission a RACH message has emerged and prior to transmitting, such a preamble. The processor **830** determines that the first preamble is always transmitted, or it makes the determination based on whether a persistence value the UE device **800** received from the network entity is larger than a predetermined persistence value, whether the UE device has not transmitted on the RACH for longer than a predetermined time period, or whether the UE device has not on the RACH for longer than a random time period. The random time period is generated by the random number generator **840**.

The network entity may include an indication in a system information broadcast to instruct the UE device whether or not to transmit the first RACH preamble immediately after the need for transmitting a RACH message has emerged. If such an indicator is included in the system information broadcast, the processor **830** makes the determination based on the received indication.

The processor **830** may be further configured to perform one or more preparatory persistence tests, and determine whether to transmit the preamble based on the result of the preparatory persistence tests. The processor **830** first sets a parameter A as not allowing transmitting the preamble, the random number generator **840** generates a random number, the processor **830** compares the random number with a predetermined persistence value, it sets the parameter A as allowing transmitting the preamble if the random number is less than the predetermined persistence value. The generating of the random number and comparing with the predetermined persistence value are repeated for each time slot associate with the random access channel if there is no message needs to be transmitted.

The network entity for communicating with the UE device **800** on a random access channel may be a radio resource controller **910** of a base station **900**. The radio resource controller **910** may comprise a processing device **920** for configured to set a parameter according to one or more conditions of the random access channel, a transmitter **930** for transmitting the parameter as a part of a system information broadcast, and transmitting to the user equipment device **800** the acknowledgement of the first preamble on another channel, and a receiver **940** for receiving the first preamble of the message on a random access channel and for receiving the message body after an acknowledgement to the first preamble.

This invention also provides a communication system capable of operation according to the procedures provided by the above embodiments of the invention. The system comprises the network entity **910** and the user equipment device **800**.

A computer program product embodying computer readable medium with program codes stored thereon is provided for use in the user equipment device **800** for transmitting a message from the user equipment device **800** to the network entity **910** on a random access channel. The computer program product comprises instructions for determining whether it is allowed to transmit the first preamble of the message to the network entity in an immediately available access time slot of a random access channel, instructions for transmitting a preamble to the network entity **910** if the transmission is allowed, and instructions for transmitting the message body if a positive acknowledgement to the preamble is received from the network entity **910** on another channel.

The determining whether it is allowed to transmit the first preamble to the network entity may be based on a parameter determined by a preparatory persistence test, and the computer program product further comprises instructions for performing one or more preparatory persistence tests prior to determining whether to transmit the preamble based on the parameter.

In summary, this invention provides an improved method for transmitting a message comprising preambles and a message body on a contention-based channel such as a RACH. The method enables a user equipment device to transmit an initial preamble of the message on the contention-based channel without performing a persistence test in order to determining if such transmission is allowed. Furthermore, the method also allows for deciding when it is reasonable to access the contention-based channel without the persistence test preceding the first preamble. The implementation of the immediate access to the contention-based channel, as described above, will not significantly increase the load on the channel. If the load on the channel is heavy, the network can respond by directing the user equipment device to not skip the persistence test, or to adjust the persistence value P and vary the rate of the access time slot.

The advantages of the invention include reducing the access delay to the RACH in either a light traffic load on the RACH or if the UE has not transmitted for some time, or both. When used properly, this invention may reduce average waiting period for a UE to send messages on the RACH.

Although the invention is illustrated in connection with the FDD mode under E-UTRAN, it is understood that the invention is also applicable to other modes of operation such as time division duplexing (TDD) or other wireless communication platforms such as UTRAN. For instance, in other systems, a concept of back-off window may have been used instead of the persistency test. The concept of the invention is also directly applicable to the concept of the back-off window. Further, the concept of the invention is also directly applicable to systems where the random access procedure does not include a separate preamble that must be acknowledged before sending the actual random access message. If the complete random access message is sent on the contention-based channel, retransmissions of the message, following a failure, may be treated the same way as the retransmissions of the preambles.

The present invention has been disclosed in reference to specific examples therein. Numerous modifications and alternative arrangements may be devised by those skilled in the art without departing from the scope of the present invention.

**Claims**

1. A method comprising:

   carrying out a preparatory persistence test in a random access channel time slot (112,114);
   determining whether transmission of a first preamble of a message comprising one or more preambles and a message body from a user equipment device (800) to a network entity (900) in a subsequent immediately available access time slot of a random access channel is allowed (120), and
   if the result of the preparatory persistence test is successful (704) immediately transmitting the first preamble if the transmission is allowed in the subsequent time slot such that the user equipment bypasses a persistence test for the first preamble (710), and
   transmitting the message body if a positive acknowledgment to the preamble is received from the network entity on another channel.

2. The method of claim 1, wherein the determining comprises allowing to transmit the first preamble invariably.

3. The method of claim 1, further comprising:

   receiving a persistence value from the network entity (900),
   wherein the determining comprises allowing to transmit the first preamble if the received persistence value is larger than a predetermined persistence value.

4. The method according to claims 1 to 3 wherein the method comprises initiating a persistence test if no positive acknowledgement is received from the network entity.

5. An apparatus comprising:

   a processor (830) configured to carry out a preparatory persistence test in a random access time slot;
   said processor (830) configured to determine whether transmission of a first preamble of a message comprising one or more preambles and a message body to a network entity (900) in a subsequent immediately available access time slot of a random access channel is allowed,
   a transmitter (810) configured to, if the result of the preparatory persistence test is successful, immediately transmit the first preamble if the transmission is allowed in the subsequent time slot and bypass a persistence test for the first preamble, and transmit the message body if a positive acknowledgement to the first preamble is received, and
a receiver (820) configured to receive the acknowledgement from the network entity (900) on another channel.

6. The apparatus of claim 5, wherein the processor (830) is configured to allow transmitting the first preamble invariably.

7. The apparatus of claim 5, wherein the receiver (820) is configured to receive a persistence value from the network entity (900), and wherein the processor (830) is configured to allow transmitting the first preamble if the received persistence value is larger than a predetermined persistence value.

8. The apparatus of claim 5, wherein the apparatus is a user equipment device (800).

9. A computer program comprising codes means adapted to perform the method of claims 1 to 4 when the program is run on a processor.

**Patentansprüche**

1. Verfahren, das Folgendes umfasst:

   Durchführen eines vorbereitenden Persistenztests in einem Zeitschlitz eines Random Access Channels (112, 114);
   Bestimmen, ob die Übertragung einer ersten Präambel einer Nachricht, die eine oder mehrere Präambeln und einen Hauptteil umfasst, von einem User-Equipment-Gerät (800) an ein Netzelement (900) in einem nachfolgenden, unmittelbar verfügbaren Zugriffszeitschlitz eines Random Access Channels zugelassen wird (120), und
   wenn das Ergebnis des vorbereitenden Persistenztests erfolgreich ist (704), unmittelbares Übertragen der ersten Präambel, wenn die Übertragung im nachfolgenden Zeitschlitz zugelassen wird, derart, dass das User-Equipment einen Persistenztest für die erste Präambel umgeht (710), und
   Übertragen des Hauptteils der Nachricht, wenn vom Netzelement auf einem anderen Kanal eine positive Rückmeldung auf die Präambel empfangen wird.

2. Verfahren nach Anspruch 1, wobei das Bestimmen das Zulassen des beständigen Übertragens der ersten Präambel umfasst.

3. Verfahren nach Anspruch 1, das ferner Folgendes umfasst:

Empfangen eines Persistenzwerts vom Netzelement (900),
wobei das Bestimmen das Zulassen des Übertragens der ersten Präambel umfasst, wenn der empfangene Persistenzwert größer als ein Vorbestimmter Persistenzwert ist.

4. Verfahren nach Anspruch 1 bis 3, wobei das Verfahren das Starten eines Persistenztests umfasst, wenn keine positive Rückmeldung vom Netzelement empfangen wird.

5. Vorrichtung, die Folgendes umfasst:

   einen Prozessor (830), der konfiguriert ist, um einen vorbereitenden Persistenztest in einem Zeitschlitz eines Random Access Channels durchzuführen;
   wobei der Prozessor (830) konfiguriert ist, um zu bestimmen, ob die Übertragung einer ersten Präambel einer Nachricht, die eine oder mehrere Präambeln und einen Hauptteil umfasst, an ein Netzelement (900) in einem nachfolgenden, unmittelbar verfügbaren Zugriffszeitschlitz eines Random Access Channels zugelassen wird,
   einen Sender (810), der konfiguriert ist, um, wenn das Ergebnis des vorbereitenden Persistenztests erfolgreich ist, unmittelbar die erste Präambel zu übertragen, wenn die Übertragung im nachfolgenden Zeitschlitz zugelassen wird, und einen Persistenztest für die erste Präambel zu umgehen und den Hauptteil der Nachricht zu übertragen,
   wenn eine positive Rückmeldung auf die erste Präambel empfangen wird, und
   einen Empfänger (820), der konfiguriert ist, um die Rückmeldung von dem Netzelement (900) auf einem anderen Kanal zu empfangen.

6. Vorrichtung nach Anspruch 5, wobei der Prozessor (830) konfiguriert ist, um das beständige Übertragen der ersten Präambel zuzulassen.

7. Vorrichtung nach Anspruch 5, wobei der Empfänger (820) konfiguriert ist, um einen Persistenzwert von dem Netzelement (900) zu empfangen, und wobei der Prozessor (830) konfiguriert ist, um das Übertragen der ersten Präambel zuzulassen, wenn der empfangene Persistenzwert größer als ein Vorbestimmter Persistenzwert ist.

8. Vorrichtung nach Anspruch 5, wobei die Vorrichtung ein User-Equipment-Gerät (800) ist.

9. Computerprogramm, das Codemittel umfasst, die zum Ausführen des Verfahrens nach Anspruch 1 bis 4 angepasst sind, wenn das Programm auf einem Prozessor ausgeführt wird.

**Revendications**

1. Procédé comportant les étapes ci-dessous consistant à :

   mettre en oeuvre un test de résistance préparatoire dans une tranche de temps de canal d'accès aléatoire (112, 114) ;

   déterminer si la transmission d'un premier préambule d'un message comprenant un ou plusieurs préambules et un corps de message, d'un dispositif d'équipement utilisateur (800) à une entité de réseau (900), dans une tranche de temps d'accès subséquente immédiatement disponible d'un canal d'accès aléatoire, est autorisée (120) ; et

   si le résultat du test de résistance préparatoire est réussi (704), transmettre immédiatement le premier préambule si la transmission est autorisée dans la tranche de temps subséquente, de sorte que l'équipement utilisateur contourne un test de persistance pour le premier préambule (710) ; et

   transmettre le corps de message si un accusé de réception positif du préambule est reçu à partir de l'entité de réseau sur un autre canal.

2. Procédé selon la revendication 1, dans lequel l'étape de détermination comprend l'étape consistant à permettre que le premier préambule soit transmis invariablement.

3. Procédé selon la revendication 1, comprenant en outre l'étape ci-dessous consistant à :

   recevoir une valeur de persistance à partir de l'entité de réseau (900) ;

   dans lequel l'étape de détermination comprend l'étape consistant à permettre la transmission du premier préambule si la valeur de persistance reçue est supérieure à une valeur de persistance prédéterminée.

4. Procédé selon l'une quelconque des revendications 1 à 3, dans lequel le procédé comprend l'étape consistant à initier un test de persistance si aucun accusé de réception positif n'est reçu à partir de l'entité de réseau.

5. Dispositif comprenant :

   un processeur (830) configuré de manière à mettre en oeuvre un test de résistance préparatoire dans une tranche de temps d'accès aléatoire ;

   dans lequel ledit processeur (830) est configuré de manière à déterminer si la transmission d'un premier préambule d'un message comprenant un ou plusieurs préambules et un corps de message, à une entité de réseau (900), dans une tranche de temps d'accès subséquente immédiatement disponible d'un canal d'accès aléatoire, est autorisée ;

   un émetteur (810) configuré de manière à, si le résultat du test de résistance préparatoire est réussi, transmettre immédiatement le premier préambule si la transmission est autorisée dans la tranche de temps subséquente et contourner un test de persistance pour le premier préambule, et transmettre le corps de message si un accusé de réception positif du premier préambule est reçu ; et

   un récepteur (820) configuré de manière à recevoir l'accusé de réception à partir de l'entité de réseau (900) sur un autre canal.

6. Dispositif selon la revendication 5, dans lequel le processeur (830) est configuré de manière à permettre que le premier préambule soit transmis invariablement.

7. Dispositif selon la revendication 5, dans lequel le récepteur (820) est configuré de manière à recevoir une valeur de persistance à partir de l'entité de réseau (900), et dans lequel le processeur (830) est configuré de manière à permettre la transmission du premier préambule si la valeur de persistance reçue est supérieure à une valeur de persistance prédéterminée.

8. Dispositif selon la revendication 5, dans lequel le dispositif est un dispositif d'équipement utilisateur (800).

9. Programme informatique comportant un moyen de code apte à mettre en oeuvre le procédé selon l'une quelconque des revendications 1 à 4, lorsque le programme est exécuté sur un processeur.

FIG. 1

START

Preamble transmission counter M=0 — 210

200

M = M+1 — 220

222 — M<=$M_{max}$? — NO → Indicate TX status "uncussesful" — 224

END

260 — Wait for expiry of timer $T_2$

YES

Update RACH TX parameters — 226

Set timer $T_2$ — 228

Draw random number R (0<=R<1) — 230

232 — R<=$P_i$? — NO → Wait for expiry of timer $T_2$ — 234

YES

Transmit a preamble, wait for ACK — 236

240 — Access info?

No ACK ← (No Backoff)

NACK → (Backoff Procedure)

Set and wait for expiry of backoff timer $T_{BO}$ — 252

Wait for expiry of timer $T_2$ — 250

ACK

Send RACH message — 270

END

FIG. 2

START

300

Get RACH TX parameters from RRC, wait for a need for RACH transmission to emerge, get ASC selection

100

Transmit 1st preamble, wait for ACK

310

330

320

Access info? —ACK→ Send RACH message

NACK or no ACK

END

Persistence test and PRACH Procedure

200

END

FIG. 3

START

400

Get RACH TX parameters from RRC, wait for a need for RACH transmission to emerge, get ASC selection

100

NO

Access allowed? ($T>T_B$? or $N>N_B$?)

410

YES

Transmit 1st preamble wait for ACK

420

430

Access info?

ACK

Send RACH message

440

NACK or no ACK

END

Persistence test and PRACH Procedure

200

END

FIG. 4

START

500

Get RACH TX parameters from RRC, wait for a need for RACH transmission to emerge, get ASC selection

100

Draw a random number $T_R$ for time value or $N_R$ for # of slots

502

NO

Access allowed? $(T>T_R?$ or $N>N_R?)$

504

YES

Transmit 1st preamble wait for ACK

510

530

520

Access info?

ACK

Send RACH message

NACK or no ACK

END

Persistence test and PRACH Procedure

200

END

FIG. 5

START

600

Get RACH TX parameters from RRC (may include an access indicator), wait for a need for RACH transmission to emerge, get ASC selection — 100a

NO

Immediate access allowed? — 602

YES

Transmit 1st preamble, wait for ACK — 610

620 — Access info?

ACK → Send RACH message — 630

END

NACK or no ACK

Persistence test and PRACH Procedure — 200

END

FIG. 6

FIG. 7

FIG. 8

**EP 2 090 126 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060084432 A
- WO 9719525 A